Europäisches Patentamt

European Patent Office

Office européen des brevets

(11) Publication number: **0 512 520 A2**

# EUROPEAN PATENT APPLICATION

(21) Application number: **92107663.4**

(22) Date of filing: **06.05.92**

(51) Int. Cl.5: **H04N 5/238**

(30) Priority: **09.05.91 JP 104370/91**

(43) Date of publication of application:
**11.11.92 Bulletin 92/46**

(84) Designated Contracting States:
**DE FR GB**

(71) Applicant: **MATSUSHITA ELECTRIC INDUSTRIAL CO., LTD**
**1006, Oaza Kadoma, Kadoma-shi**
**Osaka 571(JP)**

(72) Inventor: **Mimura, Hidetoshi**
**6-13-505, Yokodai-5-chome**
**Isogo-ku, Yokohama-shi(JP)**

(74) Representative: **Patentanwälte Leinweber & Zimmermann**
**Rosental 7/II Aufg.**
**W-8000 München 2(DE)**

(54) **Imaging apparatus.**

(57) A television camera provided with a CCD for making optimum a light quantity sent from a subject to the CCD, in any case independently of whether the subject is backlighted or lighted from the front side, is disclosed, in which light having passed through a lens (1) is converted by a CCD (2) into an electric signal, the electric signal is amplified by an amplifier (3) and then converted by an A-D converter (4) into a digital signal, a digital signal processor (5) divides an imaging surface into a multiplicity of blocks and sends average data at each block to a microcomputer (7), the average data at each block is weighted in the microcomputer (7), the lens (1) and the amplifier (3) are controlled on the basis of the weighted data, a signal from the digital signal processor (5) is converted by a D-A converter (6) into an analog signal, and the analog signal is delivered through an output terminal (8).

## FIG. 2

LENS PROVIDED WITH AUTOMATIC DIAPHRAGM (1) → CCD (2) → AMPLIFIER (3) → A/D CONVERTER (4) → DIGITAL SIGNAL PROCESSER (5) → D/A CONVERTER (6) → OUTPUT TERMINAL (8)

MICROCOMPUTER (7)

EP 0 512 520 A2

BACKGROUND OF THE INVENTION

1. FIELD OF THE INVENTION

The present invention relates to an imaging apparatus which is used for a television camera provided with a CCD, and can make optimum a light quantity sent from a subject to the CCD, under any lighting condition.

2. DESCRIPTION OF THE RELATED ART

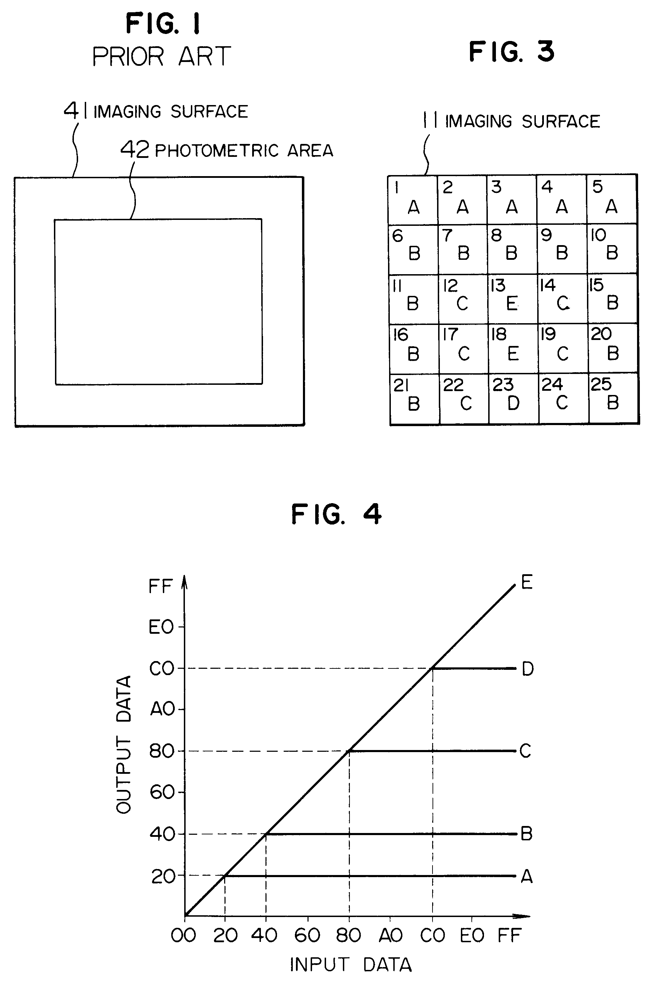

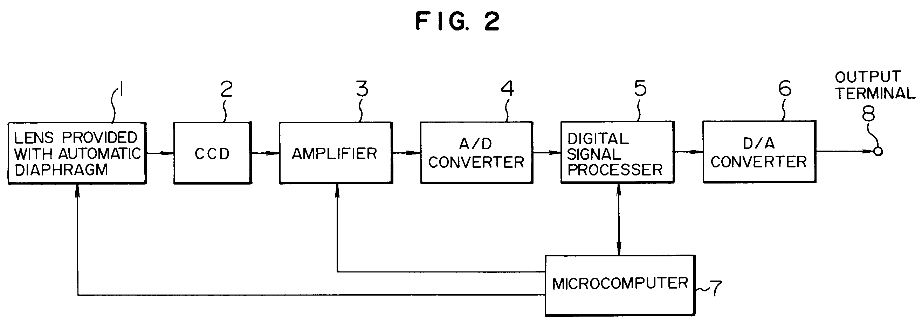

Fig. 1 shows the light measuring area (that is, photometric area) of a conventional imaging apparatus. In Fig. 1, reference numeral 41 designates an imaging surface, that is, the whole of an imaging region where an image can be formed by an ordinary television camera, and 42 a photometric area which is previously set to adjust the diaphragm of a lens incorporated in the television camera. In the imaging apparatus of this kind, photometry is not carried out in a backlighted state that strong light is incident on the outside of the photometric area 42. In other words, the diaphragm of the lens is adjusted without being affected by the light quantity incident on the outside of the photometric area 42. Thus, there is no fear of producing a black image of a subject, and the diaphragm of the lens can be controlled so that the light quantity sent from the subject to the imaging surface is optimum. Further, in a case where the above-mentioned, backlighted state is detected, the light quantity from the subject can be made more favorable, by opening the diaphragm of the lens more than usual.

In the conventional imaging apparatus mentioned above, however, the diaphragm of the lens is closed in a backlighted state that strong light is incident on the photometric area 42. Accordingly, in this state, it is impossible to keep optimum the light quantity from the subject. Further, in a case where the diaphragm of the lens is adjusted so as to be opened more than usual, there arises a problem that the light quantity from a bright portion of a subject lighted from the front side thereof becomes saturated and thus the bright portion cannot be detected.

SUMMARY OF THE INVENTION

It is an object of the present invention to provide an imaging apparatus which can solve the above problems of the prior art, and in which the diaphragm of a lens and the gain of an amplifier are automatically controlled so that the light quantity from a subject is made optimum in both of a case where the subject is backlighted, and a case where the subject is lighted from the front side thereof.

In order to attain the above object, according to the present invention, there is provided an imaging apparatus, in which an imaging surface is divided into a multiplicity of blocks, a light quantity level is detected at each block, the detected light quantity level is weighted with a predetermined factor at each block, the weighted light quantity levels are averaged to obtain a mean light quantity level at the imaging surface, and the diaphragm of a lens and the gain of an amplifier are automatically controlled in accordance with the mean light quantity level.

That is, according to the present invention, the imaging surface is divided into a multiplicity of blocks, and the light quantity level at each block is weighted to calculate a condition for making optimum the light quantity from a subject independently of whether the subject is lighted from the front side thereof or backlighted. Thus, the diaphragm of the lens and the gain of the amplifier can be controlled so that the light quantity from the subject becomes optimum under any condition.

BRIEF DESCRIPTION OF THE DRAWINGS

Fig. 1 is a schematic diagram showing the imaging surface and photometric area of a conventional imaging apparatus.

Fig. 2 is a block diagram showing the outline of an embodiment of an imaging apparatus according to the present invention.

Fig. 3 is a schematic diagram showing how the imaging surface of the embodiment of Fig. 2 is divided into blocks and how the blocks are classified into ranks corresponding to different weights.

Fig. 4 is a graph which shows weight characteristics used in the embodiment of Fig. 2.

DESCRIPTION OF THE PREFERRED EMBODIMENT

Fig. 2 shows the construction of an embodiment of an imaging apparatus according to the present invention. In Fig. 2, reference numeral 1 designates a lens provided with an automatic diaphragm, and 2 a charge coupled device (hereinafter referred to as "CCD"). The lens 1 is disposed in front of the CCD 2, and the diaphragm of the lens 1 is controlled by a control signal from the outside so that a light quantity received by the CCD 2 is optimum. Further, in Fig. 2, reference numeral 3 designates an amplifier for amplifying a video signal from the CCD 2, in accordance with another control signal from the outside, 4 and A-D converter for converting the amplified video signal from the amplifier 3 into a digital signal, 5 a digital signal processor (hereinafter referred to as "DSP") for making an exchange of data with a microcomputer 7, and 6 a D-A converter for converting a signal from the DSP 5 into a digital signal which is to be applied to an output terminal 8. The microcomputer 7 performs an arithmetic operation on the basis of data delivered from the DSP 5, and sends the control signals to the lens 1 and the amplifier 3.

Next, the operation of the present embodiment will be explained. Light which has passed through the lens 1 provided with the automatic diaphragm, is converted by the CCD 2 into an electric signal, which is amplified by the amplifier 3 and then converted into a digital signal by the A-D converter 4, to be applied to the DSP 5. In the DSP 5, as shown in Fig. 3, an imaging surface 11 is divided into 25 blocks. Further, pixel data at each block are summed up and averaged. The average data obtained at 25 blocks are successively delivered from the DSP 5 to the microcomputer 7. In the microcomputer 7, as shown in Fig. 3, the blocks are classified into five ranks A, B, C, D and E. Fig. 4 shows weight characteristics in each of the ranks A to E. As shown in Fig. 4, input data is clipped at a predetermined level and the predetermined level is used as output data. For example, in a case where a block belongs to the rank C, data ranging from 0 to 7F in the hexadecimal code is delivered from the block, as it is. While, data greater than 80 in the hexadecimal code is clipped at 80 in the hexadecimal code, and thus the value "80" is delivered in place of data greater than 80 in the hexadecimal. In the microcomputer 7, average data which are obtained at 25 blocks and sent from the DSP 5, are weighted in accordance with the ranks A to E, and then averaged to obtain mean data for all of the blocks. The diaphragm of the lens 1 and the gain of the amplifier 3 are automatically controlled so that the mean data thus obtained is always kept at a constant level. In more detail, when the diaphragm of the lens 1 is fully opened and moreover a signal level is raised, the amplifier 3 is controlled. An output signal from the DSP 5 is converted by the D-A converter 6 into an analog signal, which is delivered through an output terminal 8. Now, let us consider the mean data for all of 25 blocks. In a backlighted state, as can be seen from Fig. 3, strong light is incident on blocks belonging to the ranks A to C, and thus the average level at each of the blocks is raised. This average level, however, is clipped at a level, on the basis of the weight characteristics of Fig. 4. Accordingly, the output data from each of the block decreases, and thus the mean data for all of 25 blocks is also decreased. As a result, the diaphragm of the lens 1 and the amplifier 3 are controlled so that the diaphragm is more opened and the gain of the amplifier 3 is increased. Accordingly, there is no fear of producing a black image of a subject. In contrast to the backlighted state, in a state that a subject is lighted from the front side thereof, the average level at each of blocks belonging to the ranks A to C is relatively low, and is lower than a clipping level shown in Fig. 4. Accordingly, the average data at each of the blocks is delivered, as it is. Thus, the mean data for all of 25 blocks is calculated on the basis of the average data at each block. Accordingly, there is little probability that the light quantity from a bright portion of a subject becomes saturated and thus the bright portion cannot be detected. As mentioned above, according to the present embodiment, the imaging surface is divided by the DSP 5 into 25 blocks, the blocks are classified by the microcomputer 7 into the ranks A to E of Fig. 3, the average data which is obtained at each block and delivered from the DSP 5, is weighted in accordance with the weight characteristics of Fig. 4, the mean data for all of 25 blocks is calculated on the basis of weighted average data, and the diaphragm of the lens 1 and the gain of the amplifier 3 are controlled so that the mean data thus obtained is always kept constant. Accordingly, a light quantity sent from a subject to the imaging surface can be made optimum in both of a case where the subject is backlighted, and a case where the subject is lighted from the front side thereof.

As is evident from the above embodiment, according to the present invention, an imaging surface is divided into a multiplicity of blocks, data obtained at each block is weighted, mean data for all of the blocks is calculated on the basis of weighted data, and the diaphragm of a lens and the gain of an amplifier are controlled so that the mean data thus obtained is kept constant. Accordingly, a light quantity sent from a subject to the imaging surface can be made optimum in any case, independently of whether the subject is lighted from the front side thereof or backlighted.

## Claims

1. An imaging apparatus comprising:
   imaging means (1, 2) provided with an adjustable diaphragm;
   amplifying means (3) for amplifying a video signal from the imaging means; and
   signal processing means (5) for dividing an imaging surface which is expressed by the output signal of the imaging means, into a plurality of areas, for comparing data at each area with a predetermined threshold value at each area, and for controlling at least one of the imaging means and the amplifying means on the basis of the result of comparison.

2. An imaging apparatus according to Claim 1, wherein the signal processing means (5) divides an imaging surface which is expressed by the output signal of the imaging means (1, 2), into a plurality of areas, compares data resulting from division with threshold data previously set at each area, selects the threshold data when the data resulting from division is greater than or equal to the threshold data, selects the data resulting from division when the data resulting from division is smaller than the threshold data, and processes the selected data.

3. An imaging apparatus according to Claim 1 or 2, wherein the imaging means (1, 2) is made up of a lens (1) provided with an adjustable diaphragm, and a CCD (2).

# FIG. 1
## PRIOR ART

41 IMAGING SURFACE

42 PHOTOMETRIC AREA

# FIG. 3

11 IMAGING SURFACE

| 1 A | 2 A | 3 A | 4 A | 5 A |
|---|---|---|---|---|
| 6 B | 7 B | 8 B | 9 B | 10 B |
| 11 B | 12 C | 13 E | 14 C | 15 B |
| 16 B | 17 C | 18 E | 19 C | 20 B |
| 21 B | 22 C | 23 D | 24 C | 25 B |

# FIG. 4

5

# FIG. 2

EP 0 512 520 A2